# EUROPÄISCHE PATENTANMELDUNG

(11) **EP 0 816 737 A1**
(43) Veröffentlichungstag der Anmeldung: **07.01.1998**
(21) Anmeldenummer: 97107499.2
(22) Anmeldetag: 07.05.1997
(51) Int. Cl.: F16L 5/04, F16L 5/08

(54) **Dichtungselement zum Einspannen einer durch eine Maueröffnung hindurchgeführten Leitung**

(30) Priorität: 28.06.1996 DE 19626122
(71) Anmelder: Hauff-Technik GmbH & Co. KG, D-89542 Herbrechtingen (DE)
(72) Erfinder: Heck, Martin, 89447 Zöschingen (DE); Menge, Gerd-Joachim, 89542 Herbrechtingen (DE); Einecke, Manfred, 17235 Neustrelitz (DE)
(74) Vertreter: Weitzel, Wolfgang, Dr.-Ing. Patentanwalt

(57) **Zusammenfassung**

Die Erfindung betrifft ein Dichtelement (1) zum Einspannen mindestens einer Leitung, z.B. einer Rohrleitung oder eines Kabels, bestimmt zum Hindurchführen durch eine Wandöffnung, die eine Laibung aufweist;
mit mindestens einer inneren Manschette;
mit einer äußeren Manschette die dichtend an der Laibung anliegt; wobei
die Manschetten durch eine Membran miteinander verbunden sind; und
die Membran dichtend den Zwischenraum zwischen den Manschetten überbrückt und eine Relativbewegung zwischen diesen erlaubt.

## Beschreibung

Die Erfindung betrifft ein Dichtungselement zum Einspannen einer Leitung, die durch eine Wandöffnung durchgeführt wird. Die Leitung kann beispielsweise ein stromführendes Kabel sein. Auch mehrere Kabel kommen in Betracht, die parallel zueinander geführt werden. Die Leitung kann aber auch eine Rohrleitung sein, die ein fließfähiges oder gasförmiges Medium führt.

DE 38 28 693 C1 zeigt und beschreibt ein solches Dichtungselement, das im wesentlichen die Gestalt einer dicken, kreisrunden Scheibe hat, und das zum Einsetzen in eine ebensolche kreisrunde Wandlaibung bestimmt ist. Jenes Dichtungselement umfaßt als wesentliches Teil einen gummielastischen Dichtkörper. Dieser ist mit Bohrungen versehen, die achsparallel zur Scheibenachse verlaufen und dazu bestimmt sind, ein oder mehrere Kabel zu umschließen.

Der Sinn und Zweck solcher Dichtelemente besteht vor allem darin, den Raum auf der einen Seite der Wand gegenüber den Raum auf der anderen Seite der Wand zuverlässig abzusperren, so daß zwischen diesen beiden Seiten keine leitende Verbindung besteht. Dies kann beispielsweise dann wichtig sein, wenn im einen Raum Feuer ausbricht, und die Raumgase auf keinen Fall in den anderen Raum gelangen dürfen. Man verlangt somit von dem einzelnen Dichtelement, daß es einerseits die betreffende Leitung bzw. die betreffenden Leitungen dichtend umschließt, andererseits aber auch an der Laibung der betreffenden Wand, z. B. einer Mauer aus Beton, satt und dichtend anliegt.

Häufig treten jedoch Kräfte auf, die an der durch die Wand hindurchgeführten Leitung angreifen und die das Bestreben haben, die Leitung aus ihrer Lage zu verschieben, sei es in Richtung der Leitungs-Längsachse oder senkrecht hierzu. Aufgrund der Einspannung durch das Dichtelement ist jedoch keinerlei Verschiebung möglich. Dies kann dazu führen, daß an der Leitung unzulässige Verformungen und Schäden auftreten.

Der Erfindung liegt die Aufgabe zugrunde, ein Dichtelement der eingangs genannten Art derart zu gestalten, daß die Nachteile des Standes der Technik überwunden werden und auch in eingespanntem Zustand gewisse Deplazierungen der Leitung möglich sind.

Diese Aufgabe wird durch die Merkmale von Anspruch 1 gelöst. Hierdurch wird eine gewisse Relativbewegung zwischen der Leitung einerseits und der Wand andererseits ermöglicht, wohl gemerkt in eingespanntem Zustand. Dabei bleibt gleichwohl die perfekte Dichtwirkung zwischen der Leitung einerseits und der Wand andererseits voll und ganz erhalten.

Insbesondere wird die erfindungsgemäße Dichtung auch dann noch sicher in der Wandöffnung gehalten, wenn Druckdifferenzen von beispielsweise 5 bar an der Vorder- und Rückseite der Dichtung auftreten. Hierzu ist es von Vorteil, daß bei der erfindungsgemäßen Dichtung in Richtung der Wand von der Dichtung Kräfte aufgebracht werden, beispielsweise wenn das Dichtelement verspannt wird.

Das Maß der Relativbewegung läßt sich konstruktiv durch die Membran auswählen, und zwar je nach Art des Membranmateriales sowie der Membranform. So kann beispielsweise die Membran nach Art eines Faltenbalgs gestaltet sein, sie kann aus gummielastischem Material bestehen.

Die Erfindung ist anhand der Zeichnung beispielhaft näher erläutert. Darin ist im einzelnen folgendes dargestellt:
- Fig. 1: zeigt in perspektivischer Darstellung eine innere Manschette zum Einspannen von drei Kabeln.
- Fig. 2: zeigt eine Draufsicht auf ein Dichtelement in eingebautem Zustand mit hindurchgeführter Rohrleitung.
- Fig. 3: zeigt einen Teil des Gegenstandes von Fig. 2 in einem zur Leitungsachse parallelen Schnitt.
- Fig. 4: zeigt eine Variante einer Membranform.
- Fig. 5: ist eine Ansicht ähnlich jener gemäß Fig. 3 in abgewandelter Konfiguration.
- Fig. 6: ist wiederum eine Ansicht ähnlich jener gemäß Fig. 3 in einer weiteren Konfiguration.
- Fig. 7: zeigt eine innere Manschette, die zur Aufnahme bereits verlegter Rohre geteilt ausgeführt ist.
- Fig. 8: zeigt eine äußere Manschette zur Aufnahme mehrerer über eine Membran hiermit verbundener innerer Manschetten.

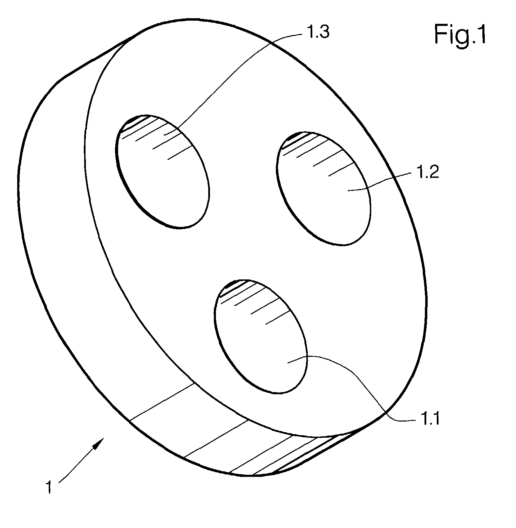

Die in Fig. 1 gezeigte innere Manschette 1 weist drei Bohrungen 1.1, 1.2 und 1.3 auf. Die Manschette 1 besteht aus elastischem Kunststoffmaterial, beispielsweise aus Gummi. Die Bohrungen 1.1, 1.2 und 1.3 dienen zum Hindurchführen von drei Kabeln, die hier nicht dargestellt sind. Statt der Kabel könnten auch Rohrleitungen zum Hindurchführen eines fließfähigen oder gasförmigen Mediums durch die Manschette 1 hindurchgeführt werden.

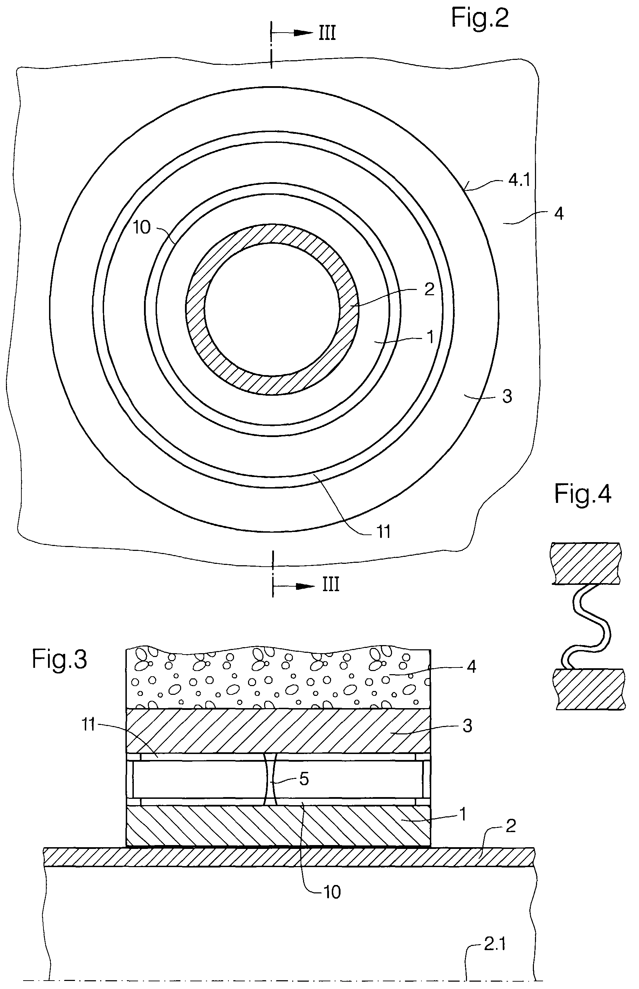

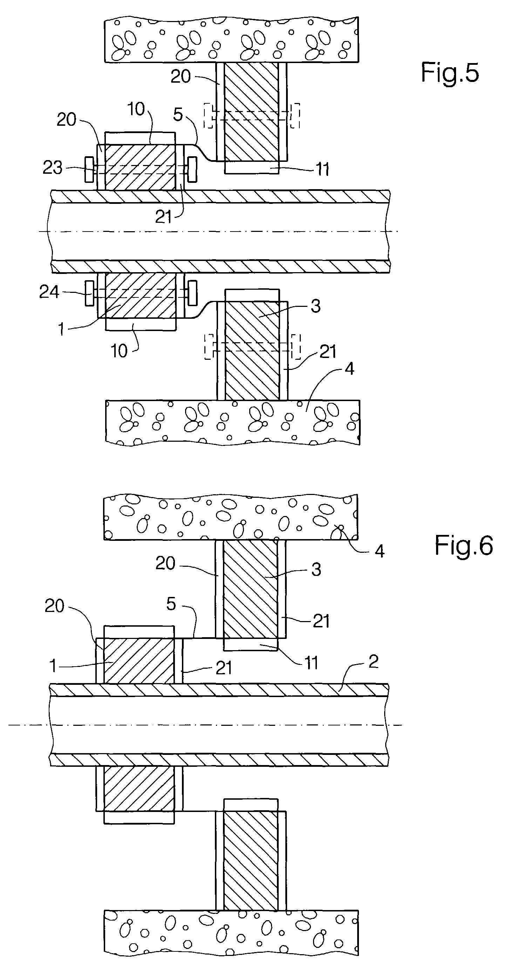

Die Figuren 2 und 3 zeigen einen Anwendungsfall, bei dem ein Dichtelement eine Rohrleitung in der Laibung einer Wand einspannt. Hierbei weist die innere Manschette an ihrem äußeren Umfang eine Vorrichtung auf, die die Formstabilität bei Anzug von Spannelementen, die nur in den in Fig. 5 und 6 dargestellten Ausfuhrungsformen, ohne Beschränkung hierauf, gezeigt sind, gewährleisten. Vorzugsweise werden als die Formstabilität gewährleistende Vorrichtungen ein oder mehrere Stützringe 10 verwendet, deren Breite so ausgewählt wird, daß sie eine ausreichende Abstützung gegen die beim Einbau wirkenden Kräfte darstellen. Ebenso wie die innere Manschette weist auch die äußere Manschette 3 einen Stützring 11 an ihrer Innenseite auf. Des weiteren erkennt man aus diesen Figuren die Rohrleitung 2; Figur 3 zeigt deren Mittelachse 2.1. Die Rohrleitung 2 ist von einer inneren Manschette 1 satt und dichtend umschlossen. Das Dichtelement umfaßt ferner eine äußere Manschette 3. Die äußere Manschette 3 liegt satt und dichtend an der Laibung 4.1 einer Wand 4 an. Das satte und dichtende Anliegen wird durch Verspannen der nur in den Figuren 5 und 6 dargestellten Spannelemente 20, 21, erreicht. Da zumindest für das äußere Dichtelement bzw. die äußere Manschette 3 die Formstabilität des Dichtelementes durch Stützring 11 gewährleistet ist, werden durch das Verspannen Kräfte in Richtung der Laibung aufgebaut. Diese Kräfte dienen bei eventuell auftretenden Druckunterschieden an Vorder- und Rückseite der Dichtung als Haltekräfte für die Dichtung.

Ebenso wie das äußere Dichtelement kann auch das innere verspannt werden, was bei Verwendung einer die Formstabilität gewährleisteten Vorrichtung 10 dazu führt, daß Kräfte in Richtung der innenliegenden zu dichtenden Rohrleitung aufgebaut werden mit einem wie schon bei der äußeren Manschette erwähnten vorteilhaften Wirkung.

Schließlich umfaßt das Dichtungselement eine Membran 5. Diese ist sowohl mit der Innenmanschette 2 als auch der Außenmanschette 3 mechanisch verbunden, so daß der Zwischenraum zwischen den beiden Manschetten 1 und 3 über seinen ganzen Umfang dichtend abgesperrt wird. Die in Fig. 3 gezeigte Membran kann abgewandelt werden, so daß sie die Gestalt eines Faltenbalges hat. Siehe Figur 4. Dies erlaubt größere Relativbewegungen zwischen Rohrleitung 2 und Mauer 4 in allen Richtungen. Es sind also Relativbewegungen sowohl in axialer als auch in radialer Richtung möglich. Darüber hinaus erlaubt die Dichtung aber auch große Winkelbewegungen, die je nach Ausführungsform mehr als 30° betragen können.

Bei den Ausführungsformen gemäß der Figuren 5 und 6 ist die Innenmanschette 1 gegen die Außenmanschette 3 in Richtung der RohrLängsachse 2.1 versetzt. Demgemäß hat die Membran 5 keine Scheibenform, sondern die Form einer Hülse. Des weiteren sind in den Figuren 5 und 6 die bereits zuvor erwähnten Spannelemente 20, 21 dargestellt. Die Spannelemente sind in vorliegendem Beispiel als ringförmige Platten ausgeführt, die miteinander durch Befestigungselemente, beispielsweise Schrauben 23, 24 verspannt werden.

Bei der Ausführungsform gemäß Figur 5 ist der Innendurchmesser der Außenmembran 3 kleiner als der Außendurchmesser der Innenmembran 1. Bei der Ausführungsform gemäß Figur 6 sind die genannten Durchmesser - Innendurchmesser der Außenmembran 3 und Außendurchmesser der Innenmembran 1 - gleich groß. Im letzteren Falle ist die Membran 5 daher eine zylindrische Hülse.

Diese beiden Konfigurationen lassen eine etwas größere Axialbewegung, d.h. in Richtung der Längsachse 2.1 der Rohrleitung 2 zu, insbesondere dann, wenn sie wiederum aus einem entsprechenden Material bestehen und eine entsprechende Konfiguration haben, z. B. diejenige eines Faltenbalges.

Die Manschetten 1 und 3 werden im allgemeinen in Draufsicht kreisrund sein. Dies ist jedoch keineswegs zwingend der Fall. Insbesondere die Außenmanschette könnte in Draufsicht quadratisch sein, bei runder Innenmanschette.

Die Stärke der Manschette kann in der Praxis stark variieren. Ist die Manschette als Ringscheibe ausgebildet, so wie in den Figuren 2 bis 4, so kann dieser Ring eine erhebliche Stärke annehmen. So kann er beispielsweise erheblich dicker sein als die Manschette 5 in Figur 3, und sich damit in dieser Ansicht über einen wesentlichen Teil der Breite der Mauer 4 erstrecken.

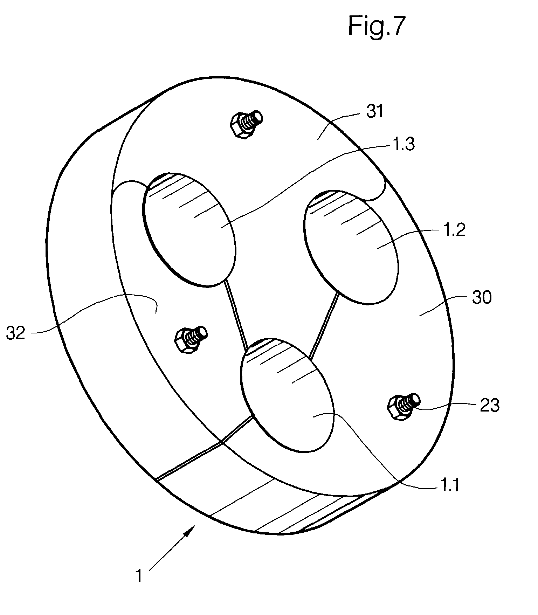

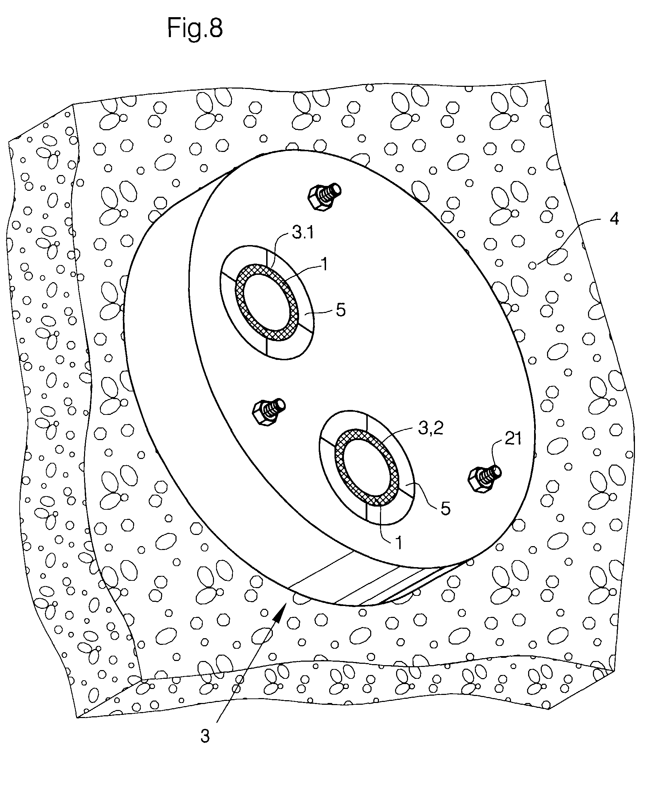

In einer weitergebildeten Ausführungsform ist vorgesehen, daß das gesamte erfindungsgemäße Dichtelement mit Membran, wie in Fig. 7 dargestellt, so teilbar ausgestaltet ist, daß dieses dafür verwendet werden kann, bereits verlegte Rohre abzudichten. Diesbezüglich wird auch auf die eingangs erwähnte DE 38 28 693 Bezug genommen, deren Offenbarungsgehalt diesbezüglich vollumfänglich in diese Anmeldung mit einbezogen wird. Die Spannelemente sind bei diesem Ausführungsbeispiel als segmentierte Platten 30, 31, 32 ausgebildet. In einer anderen Ausführungsform gemäß Fig 8. ist die äußere Manschette 3, die satt und dichtend an der Laibung einer Wand 5 anliegt, als massiver Kunststoffkörper ausgebildet, der beispielsweise wie dargestellt zwei Öffnungen 3.1 und 3.2 zur Aufnahme je einer über eine Membran in erfindungsgemäßer Weise mit der Aufnahmeöffnung verbundenen inneren Manschette 1 aufweist. Da jede der die Rohre aufnehmenden Manschetten gegenüber der äußeren Manschette bewegt bzw. verdreht werden kann, eignet sich ein solches Dichtelement insbesondere zur Dichtung von Rohrleitungen, die unterschiedliche Winkellagen zueinander aufweisen.

Mit der vorliegenden Erfindung wird ein Dichtelement angegeben, bei dem Kräfte sowohl in Richtung der äußeren Wandung wie auch in Richtung einer durch die Dichtung hindurchgeführten beispielsweise Rohrleitung aufgebaut werden, so daß ein sicherer Halt auch bei Druckdifferenzen der Dichtung gegeben ist, andererseits aber auch Flexibilität der durch die Dichtung bzw. Manschette hindurchgeführten Leitung bzw. Rohr.

## Patentansprüche

1. Dichtelement zum Einspannen mindestens einer Leitung, z.B. einer Rohrleitung oder eines Kabels, bestimmt zum Hindurchführen durch eine Wandöffnung, die eine Laibung (4.1) aufweist;
1.1 mit mindestens einer inneren Manschette (1);
1.2 mit einer äußeren Manschette (3); wobei
1.3 mindestens die äußere Manschette (3) Spannelemente (20, 21) und eine die Formstabilität gewährleistende Vorrichtung aufweist, derart, daß die äußere Manschette satt und dichtend an der Laibung anliegt; und
1.4 die Manschetten (1, 3) durch eine Membran (5) miteinander verbunden sind; und
1.5 die Membran (5) dichtend den Zwischenraum zwischen den Manschetten (1, 3) überbrückt und eine Relativbewegung zwischen diesen erlaubt.

2. Dichtelement nach Anspruch 1, dadurch gekennzeichnet, daß die innere Manschette(n) in montiertem Zustand je eine Leitung umschließt(en) und dichtend an deren äußeren Mantelfläche anschließt(en).

3. Dichtelement nach Anspruch 1 oder 2, dadurch gekennzeichnet, daß die Außenmanschette (3) die Innenmanschette (1) umschließt.

4. Dichtelement nach Anspruch 3, dadurch gekennzeichnet, daß die Membran im wesentlichen in einer zur Leitungsachse (2.1) senkrechten Ebene verläuft.

5. Dichtelement nach Anspruch 1 oder 2, dadurch gekennzeichnet, daß die Innenmanschette (1) in Bezug auf die Leitungsachse (2.1) axial gegen die Außenmanschette (3) versetzt ist.

6. Dichtelement nach Anspruch 5, dadurch gekennzeichnet, daß die Membran (5) eine zur Leitungsachse (2.1) parallele Hülse ist, deren eines Ende fest und dichtend mit der Innenmanschette (1), und deren anderes Ende fest und dichtend mit der Außenmanschette (3) verbunden ist.

7. Dichtelement nach einem der Ansprüche 1 bis 6, dadurch gekennzeichnet, daß die Membran (5) aus gummielastischem Werkstoff besteht.

8. Dichtelement nach einem der Ansprüche 1 bis 7, dadurch gekennzeichnet, daß die Membran (5) aus Metallblech besteht.

9. Dichtelement nach einem der Ansprüche 1 bis 8, dadurch gekennzeichnet, daß die Membran (5) als Faltenbalg ausgebildet ist.

10. Dichtelement nach einem der Ansprüche 1 bis 9, dadurch gekennzeichnet, daß die Laibung (4.1) der Wand (4) und der Außenumfang der Außenmanschette (3) eine unrunde, beispielsweise quadratische Kontur haben.

11. Dichtelement nach einem der Ansprüche 1-10, dadurch gekennzeichnet, daß die äußere Manschette (3) eine Vielzahl von Öffnungen (3.1, 3.2) zur Aufnahme der inneren Manschetten (1) aufweist.

12. Dichtelement nach einem der Ansprüche 1-11, dadurch gekennzeichnet, daß die innere Manschette(n) (1) Spannelemente (20, 21) aufweist(en).

13. Dichtelement nach einem der Ansprüche 1-12, dadurch gekennzeichnet, daß die innere Manschette(n) (1) die Formstabilität gewährleistende Vorrichtungen (10, 11) aufweist(en).
